# FASCICULE DE BREVET EUROPEEN

(11) **EP 3 271 566 B1**
(45) Date de publication et mention de la délivrance du brevet: **15.08.2018**
(21) Numéro de dépôt: 16712063.3
(22) Date de dépôt: 15.03.2016
(51) Int. Cl.: F02K 1/12, F02K 1/68, F02K 1/72, F02K 1/76

(54) **INVERSEUR DE POUSSÉE POUR NACELLE DE TURBORÉACTEUR D'AÉRONEF**
SCHUBUMKEHRVORRICHTUNG FÜR EINE TURBOSTRAHL-TRIEBWERKSGONDEL EINES FLUGZEUGS
THRUST REVERSER FOR AIRCRAFT TURBOJET ENGINE NACELLE

(30) Priorité: 17.03.2015 FR 1552190
(43) Date de publication de la demande: 24.01.2018
(73) Titulaire: Safran Nacelles, 76700 Gonfreville-l'Orcher (FR)
(72) Inventeur: LEROUVREUR, Mathieu, 76700 Gonfreville l'Orcher (FR); DENIS, Rodolphe, 76700 Gonfreville l'Orcher (FR); LANFRANCHI, Florent, 76700 Gonfreville l'Orcher (FR)
(74) Mandataire: Gaillarde, Frédéric F. Ch.
(86) Numéro de dépôt international: PCT/FR2016/050572
(87) Numéro de publication internationale: WO 2016/146936

(56) Documents cités:
- EP-A2- 2 466 101
- WO-A1-2015/001276
- JP-A- 2003 269 253
- US-A- 3 814 324

## Description

L'invention concerne l'accouplement d'un inverseur de poussée pour nacelle de turboréacteur d'aéronef avec une tuyère à section variable associée.

Un aéronef est mû par plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un système mécanique d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage.

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissage visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

De façon connue, les grilles de déviation sont montées sur un cadre avant servant de partie fixe du dispositif d'inversion de poussée et rattaché à un carter de la soufflante du turboréacteur. Ce cadre avant assure également le support de vérins d'actionnement des capots mobiles.

Outre participer à une fonction d'inversion de poussée, un capot mobile d'inverseur par son appartenance à la section arrière de la nacelle inclut de facto une partie aval formant la tuyère d'éjection.

La section de la tuyère d'éjection peut être adaptée en fonction des différentes phases de vols, à savoir notamment décollage, montée, croisière, descente et atterrissage afin de toujours conserver une section optimale de tuyère en fonction du régime du turboréacteur. La tuyère sera alors appelée tuyère variable.

Une telle tuyère variable est associée à un système d'actionnement permettant cette variation de section.

Il existe plusieurs solutions pour réaliser une tuyère variable.

Une première solution est de prévoir des volets terminaux pivotants montés sur le capot mobile d'inverseur et dont le pivotement se traduit par une augmentation ou par une réduction de la section de sortie. Un tel système est décrit dans le document FR 2 929 998 notamment.

On connaît également des panneaux montés mobile en translation à l'intérieur du capot mobile d'inverseur, de manière télescopique, dont le recul ou la rétractation entraîne de façon similaire l'augmentation ou la réduction de la section de sortie. Un autre inverseur de poussée selon l'art antérieur est décrit dans le document EP2466101. Dans la cadre d'un inverseur muni d'une tuyère à section variable, il est connu d'actionner le déploiement du capot mobile et le mécanisme de variation de la section de la tuyère variable par les mêmes vérins, le capot mobile et la tuyère variable étant accouplés et désacouplés par un dispositif d'accouplement.

Ce dispositif d'accouplement relie sélectivement le capot et la tuyère variable de manière rigide, la tuyère variable étant libre lorsque le capot est verrouillé sur la structure de l'inverseur dans sa position de jet direct, et la tuyère variable étant accouplée sur le capot lorsque le capot est déverrouillé, de sorte que la tuyère et le capot sont entraînés en déplacement simultanément.

Ce type de dispositif d'accouplement est généralement relativement complexe, il nécessite souvent un alignement de différentes pièces pour permettre l'accouplement du capot et de la tuyère variable.

Le nombre élevé de pièces de ce type de dispositif d'accouplement est source de panne et conduit souvent à une fiabilité moyenne.

De plus, les à-coups d'accouplement et de désaccouplement ne sont pas amortis et peuvent conduire à des contraintes pénalisantes en termes d'usure et de fiabilité des pièces mécaniques.

La présente invention vise notamment à résoudre ces inconvénients et se rapporte pour ce faire à un inverseur de poussée pour nacelle de turboréacteur d'aéronef comprenant au moins :
- un capot d'inversion de poussée mobile en translation suivant une direction sensiblement parallèle à un axe longitudinal de la nacelle, entre une position de jet direct et une position de jet inversé,
- une tuyère de sortie de section variable qui est agencée dans le prolongement aval dudit capot et qui est mobile entre au moins une position de section d'éjection réduite, une position de section d'éjection augmentée et une position neutre intermédiaire, et
- au moins un actionneur qui comprend un corps monté sur une structure fixe de l'inverseur et une tige d'actionnement, ladite tige étant adaptée pour entraîner en déplacement la tuyère variable et le capot mobile,
ledit inverseur étant remarquable en ce qu'il comprend un coupleur passif comportant :
- un boîtier creux solidaire du capot d'inversion de poussée, et qui délimite intérieurement une cavité s'étendant axialement globalement suivant l'axe de la tige d'actionnement et qui est délimitée radialement par une paroi amont radiale et par une paroi avale radiale ;
- un piston fixé sur la tige d'actionnement de l'actionneur et qui est monté coulissant dans le boîtier du coupleur en divisant hermétiquement ladite cavité en deux compartiments comprenant un compartiment amont situé entre la paroi amont et le piston et un compartiment aval situé entre la paroi avale et le piston, chaque compartiment étant rempli d'un fluide ; et
- un limiteur de débit unidirectionnel assurant la liaison fluidique entre les deux compartiments, ledit limiteur de débit limitant le débit de circulation du fluide dans le sens d'un écoulement fluidique allant du compartiment aval vers le compartiment amont, et autorisant une circulation libre du fluide dans le sens d'un écoulement fluidique allant du compartiment amont vers le compartiment aval.

L'inverseur proposé par l'invention est plus simple, plus léger, plus compact et plus fiable que les inverseurs utilisant des verrouillages relatifs de la tuyère et du capot mobile d'inversion.

En effet, l'inverseur selon l'invention est dépourvu de moyens de commande, il ne nécessite aucun dispositif de synchronisation ou d'alignement du capot d'inversion de poussée et de la tuyère.

De manière avantageuse, dans la position de section d'éjection réduite pour la tuyère, le piston est sensiblement en butée contre la paroi avale du boîtier.

Il est entendu par « sensiblement en butée contre la paroi avale du boîtier », le fait que le piston vient en butée contre un organe de butée aval (par exemple un joint torique) placé à proximité de la paroi avale du boîtier, avec un écartement suffisant vis-à-vis de cette paroi avale pour que le piston ne vienne pas boucher l'orifice aval en communication fluidique avec le limiteur de débit.

Encore avantageusement, dans la position de section d'éjection augmentée pour la tuyère, le piston est sensiblement en butée contre la paroi amont du boîtier.

Il est entendu par « sensiblement en butée contre la paroi amont du boîtier », le fait que le piston vient en butée contre un organe de butée amont (par exemple un joint torique) placé à proximité de la paroi amont du boîtier, avec un écartement suffisant vis-à-vis de cette paroi amont pour que le piston ne vienne pas boucher l'orifice amont en communication fluidique avec le limiteur de débit.

Dans une première séquence, lorsque l'on souhaite augmenter la section de sortie de la tuyère, en partant d'une section réduite ou neutre, le capot d'inversion se trouve en position verrouillée par rapport à la structure fixe de la nacelle (position jet direct), et l'actionneur est commandé afin de déplacer la tige d'actionnement vers l'amont (sens de rétractation de la tige). Lors de ce déplacement de la tige d'actionnement, le piston déplace le fluide contenu dans le compartiment amont du boîtier en direction du compartiment aval à travers le limiteur de débit. Le fluide traverse ainsi le limiteur de débit qui autorise, dans ce sens, une libre circulation du fluide. Ainsi, la tige d'actionnement, solidaire du piston, entraîne en déplacement la tuyère variable pour augmenter la section de sortie de la tuyère.

Dans une deuxième séquence, lorsque l'on souhaite réduire la section de sortie de la tuyère, en partant d'une section augmentée ou neutre, le capot d'inversion se trouve en position verrouillée par rapport à la structure fixe de la nacelle (position jet direct), et l'actionneur est commandé afin de déplacer la tige d'actionnement vers l'aval (sens de déploiement de la tige) à une première vitesse de déploiement donnée. Lors de ce déplacement de la tige d'actionnement, le piston déplace le fluide contenu dans le compartiment aval du boîtier en direction du compartiment amont à travers le limiteur de débit. Le fluide traverse ainsi le limiteur de débit qui tend à limiter, dans ce sens, le débit de circulation du fluide. Cependant, du fait que cette première vitesse de déploiement est relativement faible, et du fait que le boîtier reste fixe (ou statique) car solidaire du capot d'inversion qui est verrouillé, le piston se déplace vers l'aval et pousse le fluide vers le compartiment amont du boîtier, de sorte que la tige d'actionnement, solidaire du piston, entraîne en déplacement la tuyère variable pour réduire la section de sortie de la tuyère.

Dans une troisième séquence, lorsque l'on souhaite actionner le capot d'inversion afin de le faire passer de la position de jet direct vers la position de jet inversé, le capot d'inversion est tout d'abord déverrouillé de la structure fixe de la nacelle. Ainsi, le capot d'inversion, et donc le boîtier, sont libres de se déplacer vers l'aval. Ensuite, l'actionneur est commandé afin de déplacer la tige d'actionnement vers l'aval à une seconde vitesse de déploiement donnée plus importante que la première vitesse de déploiement précitée, en partant d'une position de section d'éjection augmentée pour la tuyère. Avec une telle seconde vitesse de déplacement de la tige d'actionnement, et donc du piston, ce piston déplace le fluide contenu dans le compartiment aval du boîtier en direction du limiteur de débit. Dans ce sens de circulation du fluide, le limiteur de débit limite le débit de circulation du fluide et ainsi freine fortement le passage du fluide en direction du compartiment amont. Ainsi, le limiteur de débit freine fortement le déplacement relatif du piston par rapport au boîtier. Par conséquent, le déplacement relatif de la tige d'actionnement par rapport au capot d'inversion est lui aussi interdit, ce qui empêche tout pivotement de la tuyère. Le boîtier transmet quant à lui le mouvement de translation de la tige d'actionnement au capot d'inversion, entraînant alors le passage du capot d'une position de jet direct vers une position de jet inversé.

Dans une quatrième séquence, lorsque l'on souhaite actionner le capot d'inversion afin de le faire passer de la position de jet inversé vers la position de jet direct, il suffit de commander l'actionneur afin de déplacer la tige d'actionnement vers l'amont (sens de rétractation de la tige). Au début de cette quatrième séquence, la tuyère est en position de section d'éjection augmentée et donc le piston est sensiblement en butée contre la paroi amont du boîtier. Ainsi, lors de la rétractation de la tige d'actionnement, cette tige d'actionnement entraîne directement le capot vers la position de jet direct, le piston restant sensiblement en butée contre la paroi amont du boîtier, jusqu'à ce que le capot soit au final verrouillé. Lors de cette quatrième séquence, le piston reste tout le long sensiblement en butée contre la paroi amont du boîtier, de sorte que le fluide ne subit aucun déplacement. Enfin, il suffit de réduire la section de sortie de la tuyère selon la deuxième séquence précitée.

Selon une autre caractéristique, le limiteur de débit comprend une première canalisation assurant la liaison fluidique entre les deux compartiments du boîtier, ledit dispositif hydraulique intégrant sur sa première canalisation une soupape d'étranglement.

De manière avantageuse, la soupape d'étranglement est réglable.

Selon une autre caractéristique, le limiteur de débit intègre sur sa première canalisation un régulateur de pression.

Selon une possibilité de l'invention, le régulateur de pression est placé sur la première canalisation avec son entrée en liaison directe avec le compartiment aval du boîtier et avec sa sortie en liaison directe avec la soupape d'étranglement.

Selon une autre possibilité de l'invention, le limiteur de débit comprend une seconde canalisation en parallèle de la première canalisation et assurant la liaison fluidique entre les deux compartiments du boîtier, ledit limiteur de débit intégrant sur sa seconde canalisation un clapet anti-retour interdisant la circulation du fluide dans cette seconde canalisation dans le sens d'un écoulement fluidique allant du compartiment aval vers le compartiment amont.

L'invention concerne aussi une nacelle de turboréacteur d'aéronef équipée d'un inverseur selon l'invention.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective, qui illustre une nacelle de turboréacteur équipée d'un inverseur de poussée et d'une tuyère variable ;
- la figure 2 est une vue schématique en section longitudinale, qui illustre le capot mobile de l'inverseur de poussée en position de jet direct et le coupleur passif selon l'invention ;
- la figure 3 est une vue schématique en section longitudinale, qui illustre le capot mobile de l'inverseur de poussée en position de jet inversé et le coupleur passif selon l'invention ;
- la figure 4 est une vue schématique de détail en section longitudinale, qui illustre le coupleur passif de la figure 2 dans une position correspondant à une position de section d'éjection réduite de la tuyère ;
- la figure 5 est une vue schématique de détail en section longitudinale, qui illustre le coupleur passif de la figure 2 dans une position correspondant à une position neutre intermédiaire de la tuyère ;
- la figure 6 est une vue schématique de détail en section longitudinale, qui illustre le coupleur passif de la figure 2 dans une position correspondant à une position de section d'éjection augmentée de la tuyère ;
- la figure 7 est une vue schématique de détail en section longitudinale, qui illustre le coupleur passif de la figure 2 dans une position correspondant à une position de jet inversé du capot mobile de l'inverseur ;
- la figure 8 est une vue schématique et zoomée du coupleur passif de la figure 2.

Dans la description et les revendications, on utilisera à titre non limitatif la terminologie longitudinal, vertical et transversal en référence au trièdre L, V, T indiqué aux figures, dont l'axe L est parallèle à l'axe de la nacelle.

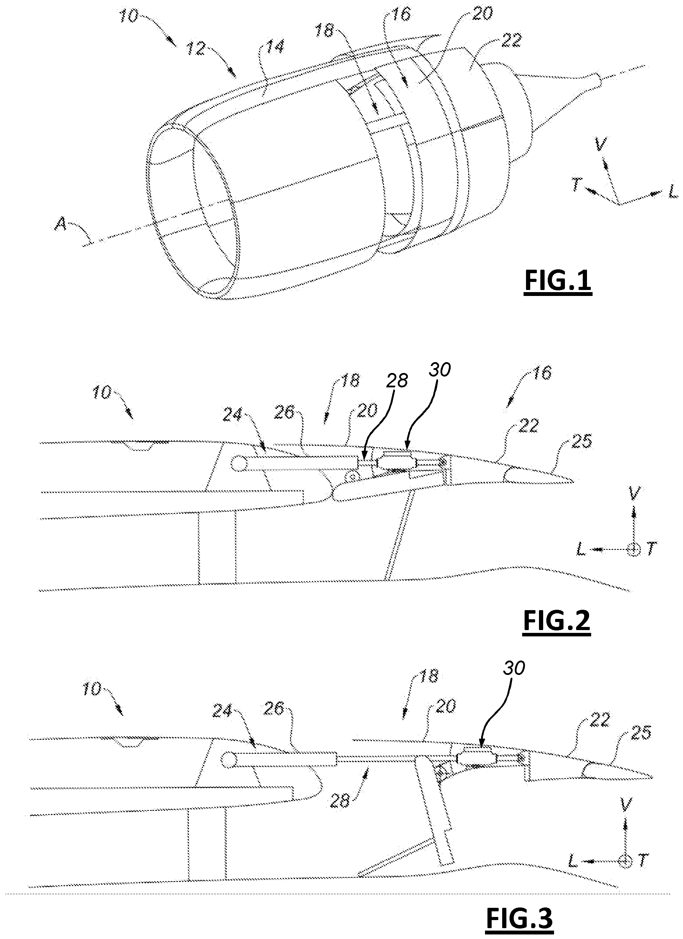

A noter que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite des figures 1 à 7.

Sur l'ensemble de ces figures, des références identiques ou analogues représentent des organes ou ensembles d'organes identiques ou analogues.

On a représenté à la figure 1 une nacelle 10 de turboréacteur pour aéronef, qui s'étend axialement suivant un axe A longitudinal.

La nacelle 10 comporte une partie avant 12 fixe qui comporte une poutraison 14 centrale de fixation sur l'aéronef, et une partie arrière 16 mobile.

La partie arrière 16 mobile comporte un inverseur 18 de poussée qui comprend un capot 20 d'inversion de poussée et une tuyère 22 d'éjection de section variable agencée dans le prolongement aval du capot 20.

Le capot 20 d'inversion de poussée est monté mobile en translation suivant une direction sensiblement parallèle à l'axe A longitudinal de la nacelle 10, entre une position de jet direct représentée à la figure 2, dans laquelle le capot 20 ouvre dans la nacelle 10 un passage destiné au flux d'air dévié, et une position de jet inversé représentée à la figure 3 dans laquelle le capot 20 ferme le passage.

L'inverseur 18 de poussée est équipé de moyens de déviation (non représentés) du flux d'air qui sont par exemple du type à grille fixe ou du type à grille mobile.

Le capot 20 est entraîné en déplacement au moyen d'une pluralité de vérin 24 dont un seul est décrit par la suite et représenté sur les figures 2 à 5 et 7.

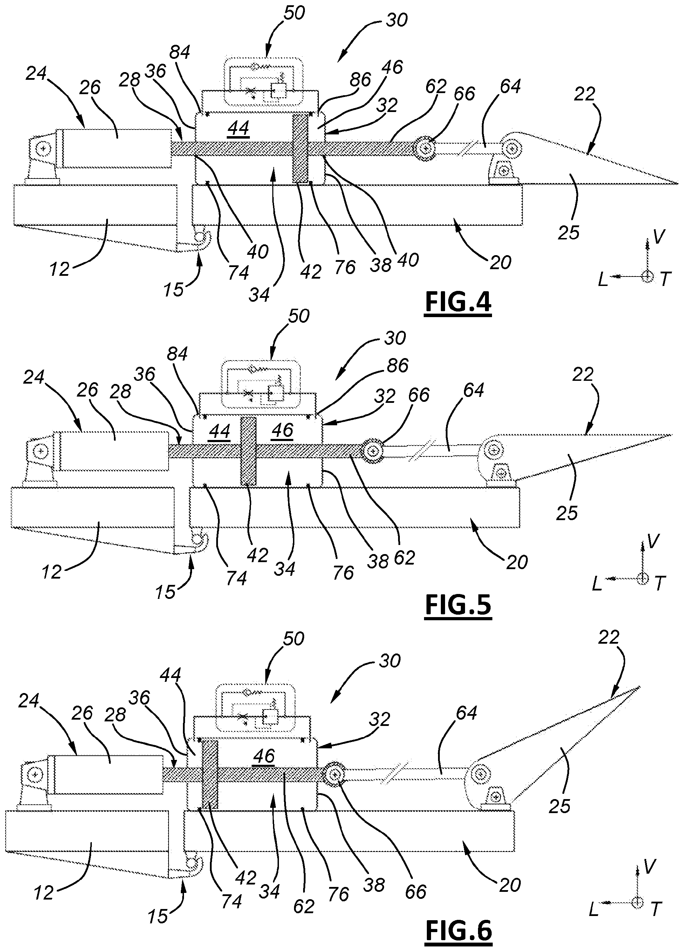

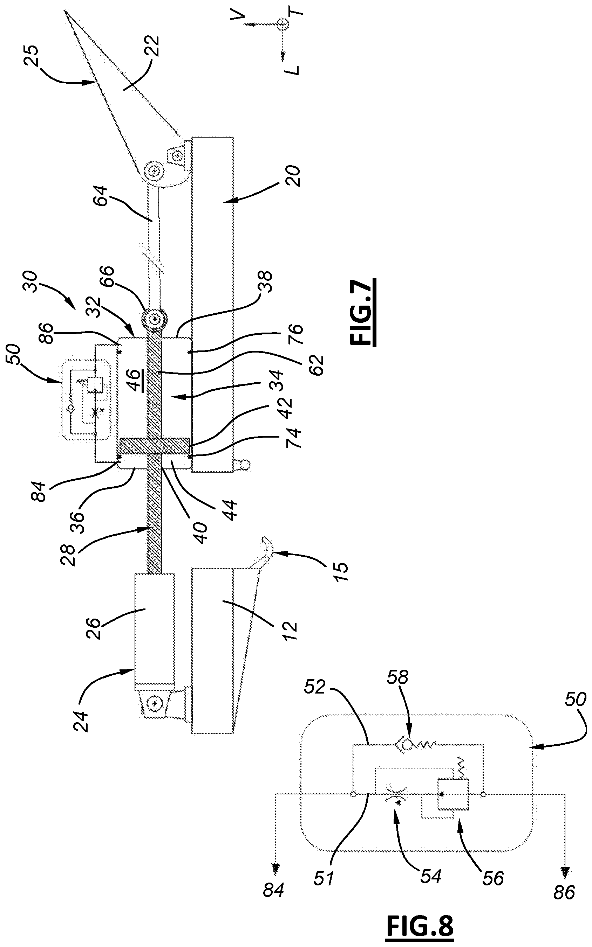

De plus, le capot 20 est associé à un moyen de verrouillage (non représenté sur les figures 2 et 3 et portant la référence 15 sur les figures 4 à 7) permettant d'immobiliser le capot 20 dans sa position de jet direct (visible sur les figures 2, 4, 5 et 6) et de libérer le capot 20 pour qu'il puisse passer dans la position de jet inversé (visible sur les figures 3 et 7), sélectivement.

La tuyère 22 de sortie de section variable est montée mobile sur la partie mobile 16 entre au moins une position de section d'éjection réduite illustrée à la figure 4, une position de section d'éjection augmentée illustrée à la figure 6 et une position neutre intermédiaire illustrée sur la figure 5.

Chacune des positions de la tuyère 22 correspond ici à une inclinaison distincte des volets 25 (dont un seul est représenté sur les figures 2 à 7) qui sont montés pivotants sur les capots 20 de l'inverseur 18 pour faire varier la section d'éjection de la tuyère 22.

A cet effet, le vérin 24 comporte un corps 26 monté sur la structure fixe de l'inverseur 18 et une tige 28 d'actionnement qui est adaptée pour entraîner en déplacement sélectivement la tuyère 22 variable ou l'ensemble constitué par la tuyère 22 variable et le capot 20 mobile.

Dans ce but, l'inverseur 18 de poussée est équipé d'un coupleur 30 passif, représenté en détail aux figures 4 à 6, qui comporte un boîtier 32 fixé sur le capot 20 d'inversion de poussée.

Le boîtier 32 du coupleur 30 délimite intérieurement une cavité 34 présentant une forme creuse cylindrique qui s'étend axialement suivant un axe (non schématisé) parallèle à l'axe de la tige 28 d'actionnement du vérin 24.

La cavité 34 est délimitée radialement par une paroi amont 36 radiale et par une paroi avale 38 radiale opposées qui sont chacune percées d'un trou de passage 40 suivant l'axe B, pour le passage de la tige 28 d'actionnement qui traverse le boîtier 32 de part en part.

De plus, le coupleur 30 comporte un piston 42 qui est fixé sur la tige 28 d'actionnement et qui est monté coulissant dans le corps 32 du coupleur 30, en divisant hermétiquement la cavité 34 en un compartiment amont 44 et en un compartiment aval 46. Chaque compartiment 44, 46 est rempli d'un fluide hydraulique incompressible, comme par exemple les fluides Skydrol® AS1241 type IV et V commercialisés par la Société Eastman. Le compartiment amont 44 est pourvu d'un orifice amont 84 placé en périphérie à proximité de la paroi amont 36, et le compartiment aval 46 est pourvu d'un orifice aval 86 placé en périphérie à proximité de la paroi aval 38.

Le coupleur 30 est conformé de sorte que :
- comme visible sur la figure 4, dans la position de section d'éjection réduite pour la tuyère 22, le piston 42 est sensiblement en butée contre la paroi avale 38 du boîtier 32, et plus précisément le piston 42 est en butée contre un organe de butée aval 76 (par exemple un joint torique) placé à proximité de la paroi avale 38 du boîtier 32, avec un écartement suffisant vis-à-vis de cette paroi avale 38 pour que le piston 42 ne vienne pas boucher l'orifice aval 86 ;
- comme visible sur la figure 6, dans la position de section d'éjection augmentée pour la tuyère 22, le piston 42 est sensiblement en butée contre la paroi amont 36 du boîtier 32, et plus précisément le piston 42 est en butée contre un organe de butée amont 74 (par exemple un joint torique) placé à proximité de la paroi amont 36 du boîtier 32, avec un écartement suffisant vis-à-vis de cette paroi amont 36 pour que le piston 42 ne vienne pas boucher l'orifice amont 84 ;
- comme visible sur la figure 5, dans la position neutre intermédiaire pour la tuyère 22, le piston 42 est situé à mi chemin entre la paroi avale 38 et la paroi amont 36 du boîtier 32.

Aussi, le coupleur 30 est équipé d'un limiteur de débit 50 unidirectionnel assurant la liaison fluidique entre les deux compartiments 44, 46 du boîtier 42, via respectivement l'orifice amont 84 et l'orifice aval 86. Ce limiteur de débit 50 hydraulique est conçu pour :
- limiter le débit de circulation du fluide dans le sens d'un écoulement fluidique allant du compartiment aval 46 vers le compartiment amont 44, et
- autoriser une circulation libre du fluide dans le sens d'un écoulement fluidique allant du compartiment amont 44 vers le compartiment aval 46.

Le piston 42 est plein, de sorte que les deux compartiments 44, 46 ne peuvent pas communiquer fluidiquement à travers le piston 42, mais peuvent communiquer fluidiquement uniquement via le limiteur de débit 50, à travers les orifices 84, 86.

Plus particulièrement, et en référence à la figure 8, le limiteur de débit 50 comprend une première canalisation 51 et une seconde canalisation 52 en parallèle et assurant la liaison fluidique entre les deux compartiments 44, 46. Ce limiteur de débit 50 est équipé de :
- une soupape d'étranglement 54, réglable ou pas, placé sur la première canalisation 51, cette soupape d'étranglement 54 formant une restriction fluidique, variable ou pas ;
- un régulateur de pression 56 placé sur la première canalisation 51 avec son entrée en liaison directe avec le compartiment aval 46 et avec sa sortie en liaison directe avec la soupape d'étranglement 54 ; et
- un clapet anti-retour 58 placé sur la seconde canalisation 52, ce clapet anti-retour 58 interdisant la circulation du fluide dans cette seconde canalisation 52 dans le sens d'un écoulement fluidique allant du compartiment aval 46 vers le compartiment amont 44.

Le limiteur de débit 50 est réglé de sorte que, lorsque le capot 20 est déverrouillé (comme visible sur la figure 7) et lorsque l'actionneur 24 est commandé pour déplacer la tige 28 vers l'aval afin de faire passer le capot 20 d'une position , le limiteur de débit 50 s'oppose au déplacement du fluide du compartiment aval 46 vers le compartiment amont 44, et ainsi s'oppose au déplacement relatif de la tige 28 d'actionnement par rapport au boîtier 32, et donc par rapport au capot 20, pour permettre l'entraînement en déplacement de l'ensemble constitué par le capot 20 et la tuyère 22.

A l'inverse, lorsque le capot 20 est verrouillé, le vérin 24 entraîne la tige 28 d'actionnement à l'encontre des déplacements fluidiques qui amortissent les déplacements de la tige 28, pour permettre l'entraînement en déplacement de la tuyère 22.

Quatre séquences sont envisageables avec cet inverseur 18 de poussée.

Dans une première séquence, on souhaite augmenter la section de sortie de la tuyère 22, en partant d'une section réduite (illustrée sur la figure 4) ou neutre (illustrée sur la figure 5), pour aller jusqu'à une section augmentée (illustrée sur la figure 6) ; le capot 20 d'inversion se trouvant en position verrouillée par rapport à la structure fixe 12 de la nacelle, de sorte que le boîtier 32 est fixe ou statique. Dans cette première séquence, l'actionneur 24 est commandé afin de déplacer la tige 28 d'actionnement vers l'amont (sens de rétractation de la tige 28, en direction de la gauche sur la figure 4). Lors de ce déplacement de la tige 28 d'actionnement, le piston 42 déplace le fluide contenu dans le compartiment amont 44 du boîtier 32 en direction du compartiment aval 46 à travers le limiteur de débit 50. Le fluide traverse ainsi le limiteur de débit 50 essentiellement dans sa seconde canalisation 52, via le clapet anti-retour 58, et ce limiteur de débit 50 autorise, dans ce sens, une libre circulation du fluide. Ainsi, la tige 28 d'actionnement, solidaire du piston 42, se déplace relativement au boîtier 32 statique et elle entraîne en déplacement le volet 25 de la tuyère 22 variable pour augmenter la section de sortie de la tuyère 22.

Dans une deuxième séquence, on souhaite réduire la section de sortie de la tuyère 22, en partant d'une section augmentée (illustrée sur la figure 6) ou neutre (illustrée sur la figure 5), pour aller jusqu'à une section réduite (illustrée sur la figure 4) ; le capot 20 d'inversion se trouvant en position verrouillée par rapport à la structure fixe 12 de la nacelle, de sorte que le boîtier 32 est fixe ou statique. Dans cette deuxième séquence, l'actionneur 24 est commandé afin de déplacer la tige 28 d'actionnement vers l'aval (sens de déploiement de la tige 28, en direction de la droite sur la figure 6) à une première vitesse de déploiement donnée. Lors de ce déplacement de la tige 28 d'actionnement, le piston 42 déplace le fluide contenu dans le compartiment aval 46 du boîtier 32 en direction du compartiment amont 44 à travers le limiteur de débit 50. Le fluide ne circule pas dans la seconde canalisation 52, à cause du clapet anti-retour 58, et passe à travers le régulateur de pression 56 puis la soupape d'étranglement 54. Du fait que cette première vitesse de déploiement est relativement faible, et du fait que le boîtier 32 est statique, le piston 42 se déplace vers l'aval et pousse le fluide vers le compartiment amont 44 du boîtier 32, de sorte que la tige 28 d'actionnement, solidaire du piston, entraîne en déplacement le volet 25 de tuyère 22 variable pour réduire la section de sortie de la tuyère 22.

Dans une troisième séquence, on souhaite actionner le capot 20 d'inversion afin de le faire passer de la position de jet direct (illustrée sur les figures 2 et 4) vers la position de jet inversé (illustré sur la figure 7). Tout d'abord, le capot 20 d'inversion est déverrouillé de la structure fixe 12 de la nacelle 10. Ainsi, le capot 20 d'inversion, et donc le boîtier 32, sont libres de se déplacer vers l'aval. Au début de cette troisième séquence, la tuyère 22 est en position de section d'éjection augmentée (comme visible sur la figure 6) et donc le piston 42 est sensiblement en butée contre la paroi amont 36 du boîtier 32. Ensuite, l'actionneur 24 est commandé afin de déplacer la tige 28 d'actionnement vers l'aval (sens de déploiement de la tige 28, en direction de la droite sur les figures 2 et 6) à une seconde vitesse de déploiement donnée relativement élevée par rapport à la première vitesse de déploiement précitée. Le piston 42 exerce une poussée sur le fluide contenu dans le compartiment aval 46 du boîtier 32 en direction du limiteur de débit 50. Le fluide ne circule pas dans la seconde canalisation 52, à cause du clapet anti-retour 58, et s'engage dans la première canalisation 51 pour passer à travers le régulateur de pression 56 puis la soupape d'étranglement 54. Avec une telle seconde vitesse de déplacement de la tige 28 d'actionnement, et donc du piston 42, la soupape d'étranglement 54 limite le débit de circulation du fluide et ainsi limite le passage du fluide en direction du compartiment amont 44. Ainsi, le limiteur de débit 50 empêche le déplacement relatif du piston 42 par rapport au boîtier 32. Par conséquent, le déplacement relatif de la tige 28 d'actionnement par rapport au capot 20 d'inversion est lui aussi interdit, ce qui empêche tout pivotement de la tuyère 25. Le boîtier 32 transmet quant à lui le mouvement de translation de la tige 28 d'actionnement au capot 20 d'inversion, entraînant alors le passage du capot 20 d'une position de jet direct vers une position de jet inversé. En toute fin, il est envisageable de réduire la section la tuyère 22 en suivant sensiblement la deuxième séquence précitée, autrement dit en déployant la tige 28 selon la première vitesse de déploiement.

Dans une quatrième séquence, on souhaite actionner le capot 20 d'inversion afin de le faire passer de la position de jet inversé (illustré sur la figure 7) vers la position de jet direct (illustrée sur les figures 2 et 4). L'actionneur 24 est commandé afin de déplacer la tige 28 d'actionnement vers l'amont (sens de rétractation de la tige 28, en direction de la gauche sur la figure 7). Au début de cette quatrième séquence, la tuyère 22 est en position de section d'éjection augmentée (comme visible sur la figure 7) et donc le piston 42 est sensiblement en butée contre la paroi amont 36 du boîtier 32. Ainsi, lors de ce déplacement de la tige 28 d'actionnement, le piston 42 reste en butée contre cette paroi amont 36 et le fluide ne subit aucun déplacement, de sorte que la tige 28 d'actionnement, solidaire du piston 42, entraîne directement le capot 20 vers la position de jet direct, ce capot étant au final verrouillé. Enfin, il suffit de réduire la section de sortie de la tuyère 20 en suivant la deuxième séquence précitée.

Les vitesses de déploiement des actionneurs 24 dans la deuxième séquence est extrêmement faible vis-à-vis des vitesses dans la troisième séquence. L'invention propose donc d'utiliser la propriété visqueuse des fluides qui tend à faciliter l'écoulement à basse vitesse (deuxième séquence) et le limiter à haute vitesse (troisième séquence). Le limiteur de débit 50 agit ainsi passivement en fonction de la vitesse de déploiement des actionneurs 24, pour permettre les différentes séquences précitées. Le boitier 32 est de constitution simple, peu encombrant et propose, avec le limiteur de débit 50, un fonctionnement passif; le limiteur de débit 50 permettant de facilement s'accommoder aux variations brusques de pression dans le boitier 32.

Selon un autre aspect, la tige 28 d'actionnement comporte un premier tronçon 62 qui est monté coulissant dans le corps 26 du vérin 24 et également monté coulissant dans le boîtier 32 du coupleur 30, et un second tronçon 64 qui est articulé sur le volet 25 de la tuyère 22. Comme on peut le voir sur les figures 4, 5 et 7, le premier tronçon 62 et le second tronçon 64 sont reliés entre eux par une liaison mécanique 66 qui, éventuellement, permet un désaxage sensible et un désaccouplement du premier tronçon 62 et du second tronçon 64 de la tige 28 d'actionnement. Cette liaison mécanique 66 peut permettre de dissocier le premier tronçon 64 du second tronçon 66 de la tige 28 d'actionnement lors de l'ouverture du capot 20 en configuration de maintenance.

## Revendications

1. Inverseur (18) de poussée pour nacelle (10) de turboréacteur d'aéronef comprenant au moins :
- un capot (20) d'inversion de poussée mobile en translation suivant une direction sensiblement parallèle à un axe (A) longitudinal de la nacelle (10), entre une position de jet direct et une position de jet inversé,
- une tuyère (22) de sortie de section variable qui est agencée dans le prolongement aval dudit capot (20) et qui est mobile entre au moins une position de section d'éjection réduite, une position de section d'éjection augmentée et une position neutre intermédiaire, et
- au moins un actionneur (24) qui comprend un corps (26) monté sur une structure fixe de l'inverseur (18) et une tige (28) d'actionnement, ladite tige (28) étant adaptée pour entraîner en déplacement la tuyère (22) variable et le capot (20) mobile,
ledit inverseur (18) étant **caractérisé en ce qu'**il comprend un coupleur (30) passif comportant :
- un boîtier (32) creux solidaire du capot (20) d'inversion de poussée, et qui délimite intérieurement une cavité (34) s'étendant axialement globalement suivant l'axe (B) de la tige (28) d'actionnement et qui est délimitée radialement par une paroi amont (36) radiale et par une paroi avale (38) radiale ;
- un piston (42) fixé sur la tige (28) d'actionnement de l'actionneur (24) et qui est monté coulissant dans le boîtier (32) du coupleur (30) en divisant hermétiquement ladite cavité (34) en deux compartiments comprenant un compartiment amont (44) situé entre la paroi amont (36) et le piston (42) et un compartiment aval (46) situé entre la paroi avale (38) et le piston (42), chaque compartiment (44 ; 46) étant rempli d'un fluide ; et
- un limiteur de débit (50) unidirectionnel assurant la liaison fluidique entre les deux compartiments (44, 46) du boîtier (42), ledit limiteur de débit (50) limitant le débit de circulation du fluide dans le sens d'un écoulement fluidique allant du compartiment aval (46) vers le compartiment amont (44), et autorisant une circulation libre du fluide dans le sens d'un écoulement fluidique allant du compartiment amont (44) vers le compartiment aval (46).

2. Inverseur (18) de poussée selon la revendication 1, dans lequel, dans la position de section d'éjection réduite pour la tuyère (22), le piston (42) est sensiblement en butée contre la paroi avale (38) du boîtier (32).

3. Inverseur (18) de poussée selon les revendications 1 ou 2, dans lequel, dans la position de section d'éjection augmentée pour la tuyère (22), le piston (42) est sensiblement en butée contre la paroi amont (36) du boîtier (32).

4. Inverseur (18) de poussée selon l'une quelconque des revendications 1 à 3, dans lequel le limiteur de débit (50) comprend une première canalisation (51) assurant la liaison fluidique entre les deux compartiments (44, 46) du boîtier (32), ledit dispositif hydraulique (50) intégrant sur sa première canalisation (51) une soupape d'étranglement (54).

5. Inverseur (18) de poussée selon la revendication 4, dans lequel la soupape d'étranglement (54) est réglable.

6. Inverseur (18) de poussée selon les revendications 4 ou 5, dans lequel le limiteur de débit (50) intègre sur sa première canalisation (51) un régulateur de pression (56).

7. Inverseur (18) de poussée selon la revendication 6, dans lequel le régulateur de pression (56) est placé sur la première canalisation (51) avec son entrée en liaison directe avec le compartiment aval (46) du boîtier (32) et avec sa sortie en liaison directe avec la soupape d'étranglement (54).

8. Inverseur (18) de poussée selon l'une quelconque des revendications 4 à 7, dans lequel le limiteur de débit (50) comprend une seconde canalisation (52) en parallèle de la première canalisation (51) et assurant la liaison fluidique entre les deux compartiments (44, 46) du boîtier (32), ledit limiteur de débit (50) intégrant sur sa seconde canalisation (52) un clapet anti-retour (58) interdisant la circulation du fluide dans cette seconde canalisation (52) dans le sens d'un écoulement fluidique allant du compartiment aval (46) vers le compartiment amont (44).

9. Nacelle (10) de turboréacteur d'aéronef équipée d'un inverseur (18) selon l'une quelconque des revendications 1 à 8.

## Patentansprüche

1. Schubumkehrer (18) für eine Flugzeug-Triebwerksgondel (10), umfassend mindestens:
- eine Schubumkehrabdeckung (20), die entlang einer im Wesentlichen zu einer Längsachse (A) der Gondel (10) parallelen Richtung zwischen einer Direktstrahl-Stellung und einer Umkehrstrahl-Stellung translationsbeweglich ist,
- eine Auslassdüse (22) von variablem Querschnitt, die in der stromabwärtigen Verlängerung der Abdeckung (20) angeordnet ist und die zwischen mindestens einer Stellung von verringertem Ausströmquerschnitt, einer Stellung von erhöhtem Ausströmquerschnitt, und einer neutralen Zwischenstellung beweglich ist, und
- mindestens einen Aktor (24), der einen an einer festen Struktur des Umkehrers (18) montierten Körper (26) und eine Betätigungsstange (28) umfasst, wobei die Stange (28) dafür ausgebildet ist, die variable Düse (22) und die bewegliche Abdeckung (20) verschiebend anzutreiben,
wobei der Umkehrer (18) **dadurch gekennzeichnet ist, dass** er eine passive Kopplung (30) umfasst, umfassend:
- ein hohles Gehäuse (32), das fest mit der Schubumkehrabdeckung (20) verbunden ist und das innen einen Hohlraum (34) begrenzt, der sich axial allgemein entlang der Achse (B) der Betätigungsstange (28) erstreckt, und der radial von einer stromaufwärtigen Radialwand (36) und von einer stromabwärtigen Radialwand (38) begrenzt wird;
- einen Kolben (42), der an der Betätigungsstange (28) des Aktors (24) befestigt ist und der im Gehäuse (32) der Kopplung (30) gleitend montiert ist, unter hermetischer Unterteilung des Hohlraums (34) in zwei Kammern, die eine zwischen der stromaufwärtigen Wand (36) und dem Kolben (42) liegende stromaufwärtige Kammer (44) und eine zwischen der stromabwärtigen Wand (38) und dem Kolben (42) liegende stromabwärtige Kammer (46) umfassen, wobei jede Kammer (44; 46) mit einem Fluid gefüllt ist; und
- einen unidirektionalen Strömungsbegrenzer (50), der die Fluidverbindung zwischen den zwei Kammern (44, 46) des Gehäuses (42) sicherstellt, wobei der Strömungsbegrenzer (50) die Zirkulationsströmung des Fluids in der Richtung eines von der stromabwärtigen Kammer (46) zur stromaufwärtigen Kammer (44) gehenden Fluidflusses begrenzt, und eine freie Zirkulation des Fluids in der Richtung eines von der stromaufwärtigen Kammer (44) zur stromabwärtigen Kammer (46) gehenden Fluidflusses ermöglicht.

2. Schubumkehrer (18) nach Anspruch 1, wobei sich der Kolben (42) in der Stellung von verringertem Ausströmquerschnitt für die Düse (22) im Wesentlichen gegen die stromabwärtige Wand (38) des Gehäuses (32) in Anschlag befindet.

3. Schubumkehrer (18) nach den Ansprüchen 1 oder 2, wobei sich der Kolben (42) in der Stellung von erhöhtem Ausströmquerschnitt für die Düse (22) im Wesentlichen gegen die stromaufwärtige Wand (36) des Gehäuses (32) in Anschlag befindet.

4. Schubumkehrer (18) nach einem der Ansprüche 1 bis 3, wobei der Strömungsbegrenzer (50) einen ersten Kanal (51) umfasst, der die Fluidverbindung zwischen den Kammern (44, 46) des Gehäuses (32) sicherstellt, wobei die Hydraulikvorrichtung (50) an ihrem ersten Kanal (51) ein Drosselventil (54) beinhaltet.

5. Schubumkehrer (18) nach Anspruch 4, wobei das Drosselventil (54) regelbar ist.

6. Schubumkehrer (18) nach den Ansprüchen 4 oder 5, wobei der Strömungsbegrenzer (50) an seinem ersten Kanal (51) einen Druckregler (56) beinhaltet.

7. Schubumkehrer (18) nach Anspruch 6, wobei der Druckregler (56) mit seinem Einlass in direkter Verbindung mit der stromabwärtigen Kammer (46) des Gehäuses (32), und mit seinem Auslass in direkter Verbindung mit dem Drosselventil (54) am ersten Kanal (51) platziert ist.

8. Schubumkehrer (18) nach einem der Ansprüche 4 bis 7, wobei der Strömungsbegrenzer (50) einen zweien Kanal (52) umfasst, der zum ersten Kanal (51) parallel ist und die Fluidverbindung zwischen den zwei Kammern (44, 46) des Gehäuses (32) sicherstellt, wobei der Strömungsbegrenzer (50) an seinem zweiten Kanal (52) eine Rückschlagklappe (58) beinhaltet, die das Zirkulieren des Fluids in diesem zweiten Kanal (52) in der Richtung eines von der stromabwärtigen Kammer (46) zur stromaufwärtigen Kammer (44) gehenden Fluidflusses unterbindet.

9. Flugzeug-Triebwerksgondel (10), die mit einem Umkehrer (18) nach einem der Ansprüche 1 bis 8 ausgerüstet ist.

## Claims

1. A thrust reverser (18) for a nacelle (10) of an aircraft turbojet engine comprising at least:
- a thrust reverser cowl (20) movable in translation along a direction substantially parallel to a longitudinal axis (A) of the nacelle (10), between a direct jet position and a reversed jet position,
- an outlet nozzle (22) of variable section which is arranged in the downstream extension of said cowl (20) and which is movable between at least one reduced ejection section position, one increased ejection section position and one intermediate neutral position, and
- at least one actuator (24) which comprises a body (26) mounted on a fixed structure of the thrust reverser (28) and an actuator rod (28), said rod (28) being adapted to drive in displacement the variable nozzle (22) and the movable cowl (20),
said thrust reverser (18) being **characterized in that** it comprises a passive coupler (30) including:
- a hollow casing (32) secured to the thrust reverser cowl (20), and which internally delimits a cavity (34) axially extending globally along the axis (B) of the actuator rod (28) and which is radially delimited by a radial upstream wall (36) and by a radial downstream wall (38);
- a piston (42) fastened on the actuator rod (28) of the actuator (24) and which is slidably mounted in the casing (32) of the coupler (30) by dividing hermetically said cavity (34) into two compartments comprising an upstream compartment (44) located between the upstream wall (36) and the piston (42) and a downstream compartment (46) located between the downstream wall (38) and the piston (42), each compartment (44; 46) being filled with a fluid; and
- a unidirectional flow rate limiter (50) ensuring the fluid connection between the two compartments (44, 46) of the casing (42), said flow rate limiter (50) limiting the circulation flow rate of the fluid in the direction of a fluid flow from the downstream compartment (46) toward the upstream compartment (44), and allowing a free circulation of the fluid in the direction of a fluid flow from the upstream compartment (44) toward the downstream compartment (46).

2. The thrust reverser (18) according to claim 1, wherein, in the reduced ejection section positionfor the nozzle (22), the piston (42) is substantially in abutment against the downstream wall (38) of the casing (32).

3. The thrust reverser (18) according to claim 1 or 2, wherein, in the increased ejection section position for the nozzle (22), the piston (42) is substantially in abutment against the upstream wall (36) of the casing (32).

4. The thrust reverser (18) according to any one of claims 1 to 3, wherein the flow rate limiter (50) comprises a first pipe (51) ensuring the fluid connection between the two compartments (44, 46) of the casing (32), said hydraulic device (50) integrating, on its first pipe (51), a throttle valve (54).

5. The thrust reverser (18) according to claim 4, wherein the throttle valve (54) is adjustable.

6. The thrust reverser (18) according to claim 4 or 5, wherein the flow rate limiter (50) integrates on its first pipe (51) a pressure regulator (56).

7. The thrust reverser (18) according to claim 6, wherein the pressure regulator (56) is placed on the first pipe (51) with its inlet in direct connection with the downstream compartment (46) of the casing (32) and its outlet in direct connection with the throttle valve (54).

8. The thrust reverser (18) according to any one of claims 4 to 7, wherein the flow rate limiter (50) comprises a second pipe (52) in parallel with the first pipe (51) and ensuring the fluid connection between the two compartments (44, 46) of the casing (32), said flow rate limiter (50) integrating on its second pipe (52) a check valve (58) preventing the circulation of the fluid in this second pipe (52) in the direction of a fluid flow from the downstream compartment (46) toward the upstream compartment (44).

9. A nacelle (10) of an aircraft turbojet engine, equipped with a thrust reverser (18) according to any one of claims 1 to 8.
